# EUROPEAN PATENT APPLICATION

(11) **EP 4 648 162 A1**
(43) Date of publication of application: **12.11.2025**
(21) Application number: 24915858.5
(22) Date of filing: 05.12.2024
(51) Int. Cl.: H01M 10/0562, H01M 4/583, H01M 4/38, H01M 10/058, H01M 4/02

(54) **ALL-SOLID-STATE BATTERY AND METHOD FOR MANUFACTURING SAME**

(30) Priority: 25.03.2024 KR 20240040201
(71) Applicant: LG Energy Solution, Ltd., Seoul 07335 (KR)
(72) Inventor: LEE, Jieun, Daejeon 34122 (KR); KIM, Yun Kyoung, Daejeon 34122 (KR); KIM, Donghyeon, Daejeon 34122 (KR); KIM, Youngbok, Daejeon 34122 (KR); KIM, Ji Young, Daejeon 34122 (KR)
(74) Representative: Goddar, Heinz J.
(86) International application number: PCT/KR2024/019839
(87) International publication number: WO 2025/206522

(57) **Abstract**

The present invention relates to an all-solid-state battery, wherein the solid electrolyte present at the interface of the negative electrode active material layer and the solid electrolyte layer has an average particle size of 1 µm to 3 µm, and a method of manufacturing same.

## Description

### [Technical Field]

This application claims the benefit of priority to Korean Patent Application No. 10-2024-0040201, filed March 25, 2024, the disclosures of which are incorporated herein by reference in their entirety.

The present invention relates to an all-solid-state battery and a method of manufacturing same.

### [Related Art]

A variety of batteries are being researched to overcome the limitations of the current lithium secondary batteries in terms of capacity, safety, output, large-scale applications, and microminiaturization.

Representative examples include metal-air batteries, which have a very high theoretical capacity compared to lithium secondary batteries; all-solid-state batteries, which have no risk of explosion and are safe; supercapacitors in terms of output; NaS batteries or redox flow batteries (RFB) for large-scale applications; and thin film batteries for microminiaturization. Continuous research is being conducted in academia and industry on these technologies.

An all-solid-state battery is a battery in which the liquid electrolyte used in a conventional lithium secondary battery is replaced with a solid electrolyte, and since no flammable solvent is used in the battery, there is no possibility of ignition or explosion due to the decomposition reaction of the conventional electrolyte, which greatly improves safety.

All-solid-state batteries can be manufactured by employing a solid electrolyte layer between the positive electrode and negative electrode, followed by high-pressure pressing. The solid electrolyte layer may be formed in the all-solid-state battery by a method of using a freestanding solid electrolyte layer, a method of transferring the solid electrolyte layer to an electrode, or a method of applying a composition for forming a solid electrolyte layer to the electrode. Among these, the method of applying a composition for forming a solid electrolyte layer to the electrode has the advantages of having high process efficiency and realizing a thin solid electrolyte layer.

The composition for forming a solid electrolyte layer is in a slurry state comprising a solid electrolyte, a binder, and a solvent. If the negative electrode active material layer includes a carbon-based material as the negative electrode active material, the porosity of the negative electrode active material layer is high, causing the solvent of the composition for forming a solid electrolyte layer to penetrate into the pores of the negative electrode active material layer. Particulate solid electrolyte and a binder may penetrate into the pores along with the solvent and be located at the interface of the negative electrode active material layer and the solid electrolyte layer, increasing the irreversible capacity of the all-solid-state battery and reducing its lifetime characteristics.

Therefore, research is needed to prevent the solid electrolyte from penetrating into the coating layer during the application of the composition for forming a solid electrolyte layer on the negative electrode active material layer.

### [Prior art]

### [Patent Reference]

Korea Laid-open Patent Publication No. 10-2023-0115924

### [Detailed Description of the Invention]

### [Technical Problem]

To solve the above problem, the inventors of the present invention conducted a various studies, and found that when the average particle size of the solid electrolyte present at the interface between the negative electrode active material layer and the solid electrolyte layer is 1 to 3 µm, the solid electrolyte penetrating into the pores of the negative electrode active material layer can be reduced, and completed the present invention.

Thus, it is an object of the present invention to provide an all-solid-state battery with improved lifetime characteristics by preventing the solid electrolyte from penetrating into the negative electrode active material layer.

It is also an object of the present invention to provide a method for manufacturing an all-solid-state battery.

### [Technical Solution]

To accomplish the above objectives, the present invention provides an all-solid-state battery comprising a positive electrode comprising a positive electrode active material layer; a negative electrode comprising a negative electrode active material layer; and a solid electrolyte layer comprising a solid electrolyte interposed between the positive electrode active material layer and the negative electrode active material layer,
wherein the negative electrode active material layer includes a carbon-based material as the negative electrode active material,
wherein the solid electrolyte present at the interface between the negative electrode active material layer and the solid electrolyte layer has an average particle size of 1 to 3 µm.
The present invention also provides a method of manufacturing the all-solid-state battery of the present invention, comprising the steps of (1) mixing a negative electrode active material, a binder, and a solvent to prepare a composition for forming a negative electrode active material layer;
(2) applying and drying the composition for forming a negative electrode active material layer on a negative electrode current collector to form a negative electrode active material layer;
(3) pressurizing the negative electrode active material layer to prepare a negative electrode;
(4) mixing a solid electrolyte, a binder, and a solvent to prepare a composition for forming a solid electrolyte layer;
(5) applying and drying the composition for forming a solid electrolyte layer onto the negative electrode active material layer to prepare a solid electrolyte layer; and
(6) laminating a positive electrode on the solid electrolyte layer.

### [Advantageous Effects]

The all-solid-state battery of the present invention can reduce the solid electrolyte penetrating into the pores of the negative electrode active material layer as the average particle size of the solid electrolyte present at the interface between the negative electrode active material layer and the solid electrolyte layer is 1 to 3 µm, which can reduce the side reaction and irreversible capacity of the negative electrode active material and the solid electrolyte during operation of the all-solid-state battery and improve the lifetime characteristics.

### [Brief Description of Drawing]

FIG. 1 is a photograph of the interface of the all-solid-state battery of Example 1.
FIG. 2 is a photograph of the interface of the all-solid-state battery of Comparative Example 1.
FIG. 3 is a graph of the lifetime characteristic of the all-solid-state battery of Experimental Example 1.

### [Best Mode]

Hereinafter, the invention will be described in more detail.

The terms and words used in this specification and claims are not to be construed in their ordinary or dictionary sense, but rather in a sense and concept consistent with the technical idea of the invention, based on the principle that the inventor may define the concept of a term as he sees fit to best describe his invention.

The terminology used in the present invention is used to describe certain examples only and is not intended to limit the invention. Expressions in the singular include the plural unless the context clearly indicates otherwise. In the present invention, the terms "comprise" or "have" are intended to designate the presence of the features, numbers, steps, actions, components, parts, or combinations thereof described in the specification, and are not to be understood as precluding the possibility of the presence or addition of one or more other features, numbers, steps, actions, components, parts, or combinations thereof.

### All-Solid-State Battery

The present invention relates to an all-solid-state battery comprising a positive electrode comprising a positive electrode active material layer; a negative electrode comprising a negative electrode active material layer; and a solid electrolyte layer comprising a solid electrolyte interposed between the positive electrode active material layer and the negative electrode active material layer,
wherein the negative electrode active material layer includes a carbon-based material as the negative electrode active material,
wherein the solid electrolyte present at the interface between the negative electrode active material layer and the solid electrolyte layer has an average particle size of 1 to 3 µm.

The negative electrode comprising the negative electrode active material layer may comprise a negative electrode current collector and a negative electrode active material layer on the negative electrode current collector.

The negative electrode current collector is intended for the support of the negative electrode active material layer and is not particularly limited as long as it has good conductivity and is electrochemically stable in the voltage range of the all-solid-state battery. For example, the negative electrode current collector may be any metal selected from the group consisting of copper, aluminum, stainless steel, titanium, silver, palladium, nickel, alloys thereof, and combinations thereof, wherein the stainless steel may be surface treated with carbon, nickel, titanium, or silver, and the alloy may preferably be an aluminum-cadmium alloy, but may also be a non-conductive polymer whose surface is treated with calcined carbon or a conductive material, or a conductive polymer.

The negative electrode current collector can form microscopic irregularities on its surface to strengthen the binding force with the negative electrode active material layer, and various forms can be used, such as films, sheets, foils, meshes, nets, porous materials, foams, non-woven materials, etc.

The negative electrode active material layer may include a carbon-based material as the negative electrode active material. The negative electrode comprising a carbon-based material as the negative electrode active material may be anodeless.

If the negative electrode of the all-solid-state battery is anodeless, lithium ions migrated from the positive electrode during charging of the all-solid-state battery can be precipitated and stored in the form of lithium metal (Li) between the negative electrode active material layer and the negative electrode current collector to form a lithium metal layer.

The carbon-based material may include at least one selected from the group consisting of natural graphite, artificial graphite, hard carbon, soft carbon, carbon black, acetylene black, Ketjen black, channel black, furnace black, lamp black, thermal black, carbon nanotubes, fullerene, carbon fiber, and carbon fluoride, preferably carbon black.

Further, the negative electrode active material layer may further comprise a metal, wherein the inclusion of the metal may result in a smoother and flatter formation of lithium metal (Li) between the negative electrode active material layer and the negative electrode current collector.

The metal is a lithiophilic metal, which may include at least one selected from the group consisting of nickel, copper, silver, gold, platinum, aluminum, zinc, palladium, and bismuth.

The negative electrode active material layer may further comprise a binder. The binder is used to increase the binding force between the negative electrode active material and the negative electrode current collector, and is not particularly limited to those used in the art.

For example, the binder may be one or a mixture or copolymer of two or more selected from the group consisting of a fluoroplastic binder comprising polyvinylidenefluoride (PVdF) or polytetrafluoroethylene (PTFE); a rubber-based binder comprising styrene butadiene rubber (SBR), acrylonitrile-butadiene rubber, or styrene-isoprene rubber; a cellulosic binder, including carboxyl methyl cellulose (CMC), starch, hydroxypropyl cellulose, and regenerated cellulose; a polyalcoholic binder; a polyolefin binder, including polyethylene or polypropylene; a polyimide binder; a polyester binder; and a silane binder.

The porosity of the negative electrode active material layer may be 15 to 40%, preferably 15 to 30%. Further, the average diameter of the pores of the negative electrode active material layer may be 0.5 to less than 0.7 µm.

A composition for forming a solid electrolyte layer can be applied to the negative electrode active material layer to form a solid electrolyte layer. The composition for forming a solid electrolyte layer is in the form of slurry, and the solvent of the slurry penetrates into the pores of the negative electrode active material layer. In general, if the negative electrode active material is a carbon-based material, the porosity of the negative electrode active material layer is high, so that the solvent of the slurry penetrates into the pores of the negative electrode active material layer, and the particulate solid electrolyte contained in the composition for forming a solid electrolyte layer penetrates together with the solvent, and the particulate solid electrolyte is located at the interface of the negative electrode active material layer and the solid electrolyte layer. The presence of particulate solid electrolyte at the interface can increase the irreversible capacity of the all-solid-state battery and cause problems with poor lifetime characteristics. In this specification, if the average particle size of the solid electrolyte is less than 1 µm, it indicates that the solid electrolyte is in the form of particulates.

However, the negative electrode active material layer of the all-solid-state battery of the present invention can solve the above problem by having the negative electrode active material layer with the above porosity and average diameter of the pores, even if the negative electrode active material includes a carbon-based material as the negative electrode active material.

The average particle size (D₅₀) of the solid electrolyte may be 2 µm to 4 µm, and D₁₀ may be a particulate of less than 1 µm. Also, the D₉₀ can be between 5 µm to 8 µm. The average particle size (D₅₀) of the solid electrolyte may be 2 µm to 4 µm, but the average particle size (D₅₀) present at the interface between the negative electrode active material layer and the solid electrolyte layer may be 1 µm to 3 µm, preferably 1 µm to 2 µm. This means that as the negative electrode active material layer has the above porosity and average diameter of the pores, the penetration of particulate solid electrolyte into the pores of the negative electrode active material layer is reduced. Thus, the all-solid-state battery of the present invention can have the effect of low irreversible capacity and excellent lifetime characteristics. If the porosity of the negative electrode active material layer exceeds 40% or the average diameter of the pores is 0.7 µm or more, the penetration of the particulate solid electrolyte into the pores of the negative electrode active material layer increases, and the average particle size of the solid electrolyte present at the interface of the negative electrode active material layer and the solid electrolyte layer may be less than 1 µm. This can increase the irreversible capacity of the all-solid-state battery and degrade its lifetime characteristics. The average particle size D50 above refers to the particle size that corresponds to 50% of the volume accumulation in the particle size distribution curve of the particles.

The positive electrode comprising the positive electrode active material layer may comprise a positive electrode current collector and a positive electrode active material layer on the positive electrode current collector.

The positive electrode current collector is the same as the negative electrode current collector described above.

The positive electrode active material layer may comprise a positive electrode active material and optionally a conductive material or a binder, the binder being as described above.

The positive electrode active material may vary depending on the type of all-solid-state battery. For example, the positive electrode active material may include, but not limited to, a layered compound such as lithium cobalt oxide (LiCoO₂), or lithium nickel oxide (LiNiO₂), or a compound substituted with one or more transition metals; a lithium manganese oxide such as Li₁₊ₓMn₂₋ₓO₄ (wherein 0≤x≤0.33), LiMnO₃, LiMn₂O₃, or LiMnO₂; a lithium copper oxide (Li₂CuO₂); a vanadium oxide, such as LiV₃O₈, V₂O₅, or Cu₂V₂O₇; Ni site-type lithium nickel compound represented by LiNi₁₋ₓMₓO₂ (wherein M is Co, Mn, Al, Cu, Fe, Mg, B or Ga; and 0.01 ≤x≤0.3); a lithium manganese complex oxide represented by LiMn₂₋ₓMₓO₂ (wherein M is Co, Ni, Fe, Cr, Zn or Ta; and 0.01 ≤x≤0.1) or Li₂Mn₃MO₈ (wherein M is Fe, Co, Ni, Cu or Zn); a lithium manganese complex oxide with spinel structure, represented by LiNiₓMn₂₋ₓO₄; LiCoPO₄; LiFePO₄; elemental sulfur (S₈); a sulfur-based compound such as Li₂Sn (wherein n is 1), an organosulfur compound or a carbon-sulfur polymer ((C₂Sₓ)n, wherein x is 2.5 to 50, and n is 2).

The conductive material is a material that electrically connects the electrolyte and the positive electrode active material and serves as a pathway for electrons to move from the current collector to the positive electrode active material, and can be used without restriction as long as it does not cause chemical changes in the lithium secondary battery and has porosity and conductivity.

For example, porous carbon-based materials can be used as the conductive material, wherein carbon-based material includes carbon black, graphite, graphene, activated carbon, and carbon fiber; and metallic fibers such as metal mesh; metallic powders such as copper, silver, nickel, or aluminum; or organic conductive materials such as polyphenylene derivatives. The conductive materials may be used alone or in combination.

Currently commercially available products as a conductive material include Acetylene Black (from Chevron Chemical Company or Gulf Oil Company), Ketjen Black EC (from Armak Company), Vulcan XC-72 (from Cabot Company), and Super P (from MMM). Examples may include acetylene black, carbon black, and graphite.

The solid electrolyte layer comprises a solid electrolyte, wherein the solid electrolyte may comprise at least one selected from the group consisting of a sulfide-based solid electrolyte, a polymer-based solid electrolyte, and an oxide-based solid electrolyte, preferably a sulfide-based solid electrolyte.

The sulfide-based solid electrolyte contains sulfur (S) and exhibits ionic conductivity of a metal belonging to Group 1 or 2 of the periodic table, and it may include a Li-P-S-based glass or a Li-P-S-based glass-ceramic.

Specifically, the sulfide-based solid electrolyte may include at least one selected from the group consisting of Li₆PS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂S₅, Li₂S-P₂S₅-SiS₂, Li₂S-P₂S₅-SnS, Li₂S-P₂S₅-Al₂S₃, Li₂S-GeS₂ and Li₂S-GeS₂-ZnS, and preferably include at least one selected from the group consisting of Li₆PS₅Cl, Li₆PS₅Br and Li₆PS₅I. The Li₆PS₅Cl, Li₆PS₅Br and Li₆PS₅I may be argyrodite-type solid electrolytes. Furthermore, the sulfide-based solid electrolyte may be doped with trace elements, for example, Li₆PS₅Cl additionally doped with bromine (Br).

The polymer-based solid electrolyte is a composite of a lithium salt and a polymeric resin, that is, a polymeric electrolyte material in the form formed by the addition of a polymeric resin to a solvated lithium salt, and may exhibit an ionic conductivity of about 1x10⁻⁷ S/cm or more, preferably about 1x10⁻⁵ S/cm or more.

Non-limiting examples of the polymeric resin include polyether-based polymers, polycarbonate-based polymers, acrylate-based polymers, polysiloxane-based polymers, phosphazene-based polymers, polyethylene derivatives, alkylene oxide derivatives such as polyethylene oxide, phosphate ester polymers, polyaziridines, polyester sulfides, polyvinyl alcohols, polyvinylidene fluorides, and polymers comprising ionic dissociating groups, and may include one or more thereof. Furthermore, the polymeric electrolyte may be a polymeric resin, for example, a branched copolymer, a comb-like polymer, and a cross-linked polymeric resin copolymerized with an amorphous polymer such as PMMA, polycarbonate, polysiloxane (PDMS), and/or phosphazene as a comonomer in a polyethylene oxide (PEO) main chain, and may include one or more thereof.

In the polymeric solid electrolyte of the present invention, the lithium salt is an ionizable lithium salt, which can be expressed as Li⁺X⁻. The anions of the lithium salts are not specifically limited, but may include F⁻, Cl⁻, Br, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The oxide-based solid electrolyte may comprise oxygen (O) and have the ionic conductivity of a metal belonging to Group 1 or 2 of the periodic table. For example, it may include at least one selected from LLTO-based compounds, Li₆La₂CaTa₂O₁₂, Li₆La₂ANb₂O₁₂(wherein A is Ca or Sr), Li₂Nd₃TeSbO₁₂, Li₃BO_{2.5}N_{0.5}, Li₉SiAlO₈, LAGP-based compounds, LATP-based compounds, Li1₊ₓTi₂₋ₓAlₓSi_{y}(PO₄)_{3-y} (wherein 0≤x≤1, and 0≤y≤1), LiAlₓZr₂₋ₓ(PO₄)₃ (wherein 0≤x≤1, and 0≤y≤1), LiTiₓZr₂₋ₓ(PO₄)₃ (wherein 0≤x≤1, and 0≤y≤1), LISICON-based compounds, LIPON-based compounds, perovskite-based compounds, nasicon-based compounds, and LLZO-based compounds.

Further, the solid electrolyte layer may further comprise a binder, the type of which is not particularly limited as long as it is commonly used in the art.

For example, it can include acrylonitrile butadiene rubber (NBR), styrene butadiene rubber (SBR), butadiene rubber (BR), styrene-butadiene-styrene copolymer (SBS), polybutadiene (PAN), styrene-ethylene/butylene-styrene block copolymer (SEBS), silicone rubber (SR), hydrogenated nitrile butadiene rubber (HNBR), poly(ethylene vinyl acetate) (PEVA), poly(methyl methacrylate) (PMMA), polyisobutene (PIB), and polyacrylate, but is not limited thereto.

### Method for Producing All-Solid-State Battery

The present invention relates to a method of manufacturing an all-solid-state battery, comprising the steps of:
(1) mixing a carbon-based material, a binder, and a solvent to prepare a composition for forming a negative electrode active material layer;
(2) applying and drying the composition for forming a negative electrode active material layer on the negative electrode current collector to form a negative electrode active material layer;
(3) pressurizing the negative electrode active material layer to prepare a negative electrode;
(4) mixing a solid electrolyte, a binder, and a solvent to prepare a composition for forming a solid electrolyte layer;
(5) applying and drying the composition for forming a solid electrolyte layer onto the negative electrode active material layer to prepare a solid electrolyte layer; and
(6) laminating a positive electrode on the solid electrolyte layer; and the all-solid-state battery prepared by these steps may be the all-solid-state battery of the present invention as described above.

Step (1) is the step of preparing a composition for forming a negative electrode active material layer, wherein the composition for forming a negative electrode active material layer is in the form of slurry and may comprise a carbon-based material, a binder and a solvent, and may further comprise a metal. The carbon-based material, binder, and metal are as described above. The solvent is not particularly limited, provided that it can disperse the carbon-based material, binder and metal.

The carbon-based material and the binder may be mixed in a weight ratio of 95:5 to 90:10.

Sep (2) is the step of forming a negative electrode active material layer by applying and drying a composition for forming a negative electrode active material layer in the form of a slurry prepared in step (1) onto a negative electrode current collector, wherein the negative electrode current collector is as described above.

The method of applying a composition for forming a negative electrode active material layer to a negative electrode current collector may comprise a method of distributing a composition for forming a negative electrode active material layer to a negative electrode current collector and then uniformly dispersing the composition using a doctor blade, a die casting method, a comma coating method, a screen printing method, or the like. In this case, the concentration of the composition for forming a negative electrode active material layer or the number of coatings can be adjusted to control the final thickness.

The drying is a process of removing solvent and moisture from the composition to dry the composition for forming a negative electrode active material layer applied to the negative electrode current collector, which may vary depending on the solvent used. For example, this can be done in a vacuum oven at 50 to 200°C. Drying method may include, for example, drying by warm air, hot air or low humidity air, vacuum drying, and irradiation with (far) infrared or electromagnetic radiation. The drying time is not specifically specified, but typically ranges 30 seconds to 24 hours.

Step (3) is the step of pressurizing the negative electrode active material layer formed in step (2), wherein the pressurization may be 30 to 500 MPa. As the negative electrode active material layer is pressurized, the porosity of the negative electrode active material layer and the average diameter of the pores can be reduced. Upon pressurization to the above range, the negative electrode active material layer of the present invention may have a porosity of 15 to 40%, and the average diameter of the pores may be 0.5 µm to less than 0.7 µm. Accordingly, as described above, the penetration of particulate solid electrolyte into the pores of the negative electrode active material layer can be reduced, thereby reducing the irreversible capacity of the all-solid-state battery and improving its life characteristics. If the negative electrode active material layer is not pressurized or is pressurized to less than 30 MPa, the porosity of the negative electrode active material layer is not reduced, so the average particle size of the solid electrolyte present at the interface between the negative electrode active material layer and the solid electrolyte layer is less than 1 µm, and the effect of improving the life characteristics of the all-solid-state battery cannot be achieved. In addition, applying a pressure exceeding 500 MPa may cause damage to the negative electrode due to the excessive pressure.

Step (4) is the step of preparing a composition for forming a solid electrolyte layer, wherein the composition for forming a solid electrolyte layer comprises a solid electrolyte, a binder and a solvent, and may be in the form of slurry. The solid electrolyte and binder are as described above. The solvent is capable of dispersing a solid electrolyte and a binder, and may have a dielectric constant of 0.5 to 10. The solvent may be, for example, xylene, hexane, benzene, anisole, isobutyl isobutyrate, toluene, or butyl butyrate.

The solid electrolyte and binder may be mixed in a weight ratio of 98:2 to 90:10.

Step (5) is the step of applying and drying the composition for forming a solid electrolyte layer prepared in step (4) onto the negative electrode active material layer to form a solid electrolyte layer, wherein the application and drying may be the same as those in step (2).

Step (6) is the step of stacking the positive electrode on the solid electrolyte layer.

The positive electrode is prepared by applying and drying a composition for forming a positive electrode active material layer on a positive electrode current collector, wherein the composition for forming a positive electrode active material layer may include a binder or a conductive material in addition to the positive electrode active material, and wherein the positive electrode current collector, the positive electrode active material, the binder, and the conductive material are as described above. Furthermore, the composition for forming a positive electrode active material layer is in the form of a slurry, and the type of solvent is not particularly limited as long as it is capable of dispersing the positive electrode active material, binder and conductive material.

The positive electrode may be prepared by applying and drying the composition for forming a positive electrode active material layer onto the positive electrode current collector, and the application and drying may be the same as those of step (2).

The shape of the all-solid-state battery is not particularly limited and can be cylindrical, stacked, coin-shaped, or otherwise.

### [Mode for Practicing the Invention]

Hereinafter, preferred examples are described for the purpose of illustrating the present invention, but it will be apparent to those skilled in the art that various changes and modifications are possible within the scope of the invention and the technical idea, and that such changes and modifications fall within the scope of the appended patent claims.

### <Manufacturing All-Solid-State Battery>

### Example 1.

The negative electrode active material (carbon black), binder (polyvinylidene fluoride), and silver (Ag) were dispersed in methylpyrrolidone to prepare a composition for forming a negative electrode active material layer in the form of slurry. The composition for forming a negative electrode active material layer was applied to the SUS as a negative electrode current collector and then vacuum dried at a temperature of 100 C for 10 hours to form a negative electrode active material layer.

The negative electrode active material layer was pressurized to 300 MPa using CIP. The porosity of the negative electrode active material layer was 25%, and the average diameter of the pores was 0.5 µm.

Solid electrolyte (argyrodite, Li₆PS₅Cl) and binder (nitrile butadiene rubber) were dispersed in butyrate to prepare a composition for forming a solid electrolyte layer in the form of slurry. The average particle size (D₅₀) of the solid electrolyte was 2.66 µm, D₁₀ was 0.79 µm, D₉₀ was 6.42 µm, and D₉₉ was 10.9 µm.

The composition for forming a solid electrolyte layer was applied to the negative electrode active material layer using a bar coater, and then vacuum dried at a temperature of 70°C for 5 hours to form a solid electrolyte layer.

The positive electrode active material (NCM 811), conductive material (carbon fiber), solid electrolyte (Li₆PS₅Cl), and binder (polytetrafluoroethylene) were dispersed in a solvent (butyrate) to prepare a composition for forming a positive electrode active material layer in the form of slurry. The composition for forming a positive electrode active material layer was applied to the positive electrode current collector and dried to prepare a positive electrode comprising a positive electrode active material layer.

An all-solid-state battery was prepared by stacking the positive electrode on the solid electrolyte layer.

### Comparative Example 1.

An all-solid-state battery was prepared by performing the same procedure as in Example 1 above, except that the process of pressurizing a negative electrode active material layer was not performed in Example 1.

The porosity of the negative electrode active material layer of the all-solid-state battery was 45%, and the average diameter of the pores was 0.7 µm.

### Experimental Example 1. Measurement of Average Particle Size (D50) of Solid Electrolyte present at the Interface between Negative Electrode Active Material Layer and Solid Electrolyte Layer

In the all-solid-state batteries of Example 1 and Comparative Example 1, the average particle size (D50) of the solid electrolyte present at the interface between the negative electrode active material layer and the solid electrolyte layer was measured.

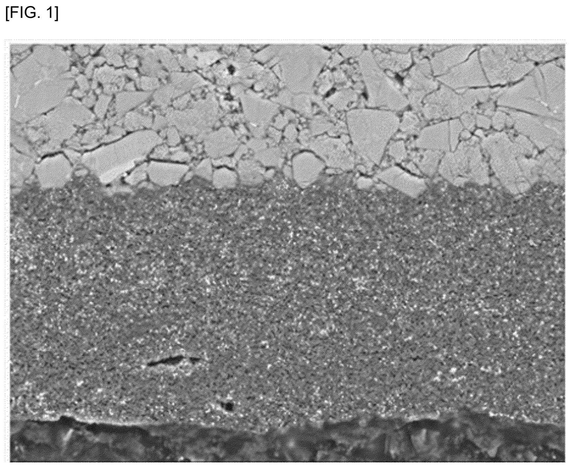

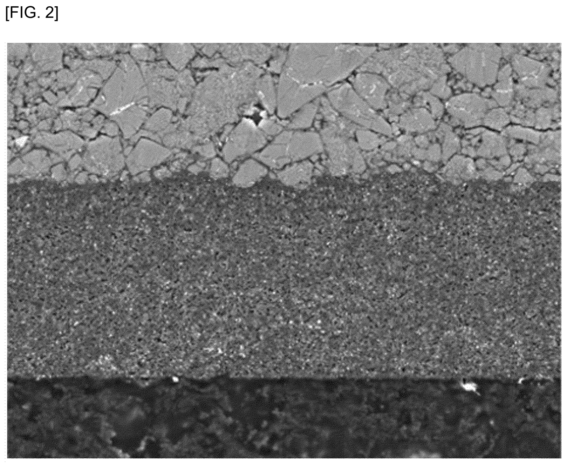

FIG. 1 is a cross-sectional view of the all-solid-state battery of Example 1, and FIG. 2 is a cross-sectional view of the all-solid-state battery of Comparative Example 1. The particle size measurement was performed using the imageJ program.

The average particle size of the solid electrolyte contained in the composition for forming a solid electrolyte layer was 2.66 µm, D₁₀ was 0.79 µm, and the average particle size (D₅₀) of the solid electrolyte present at the interface between the negative electrode active material layer and the solid electrolyte layer was measured to be 1.38 µm for Example 1 and 0.83 µm for Comparative Example 1.

Due to the penetration of particulate solid electrolyte into the pores of the negative electrode active material layer, the average particle size of the solid electrolyte present at the interface between the negative electrode active material layer and the solid electrolyte layer is smaller than that of the solid electrolyte contained in the composition for forming a solid electrolyte layer. The porosity of the negative electrode active material layer of Example 1 is lower than that of the negative electrode active material layer of Comparative Example 1, and the average diameter of the pores of Example 1 is smaller than that of Comparative Example 1, so that the average particle size of the solid electrolyte present at the interface of Example 1 is larger than that of Comparative Example 1.

### Experimental Example 2. Measurement of Lifetime Characteristics of All-Solid-State Battery

The lifetime characteristics of the all-solid-state batteries of Example 1 and Comparative Example 1 were measured.

The lifetime characteristics was measured by the capacity retention rate of the all-solid-state battery by charging the battery to 4.25V at 0.33C in CCCV mode at a temperature of 60 °C and discharging it to 3.0V at a constant current for 50 charge and discharge cycles.

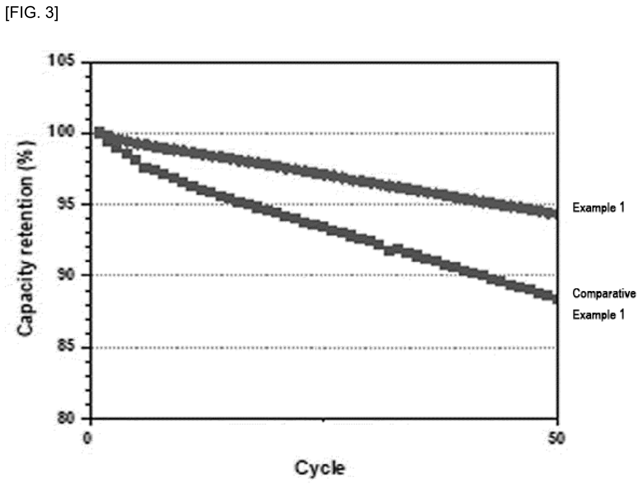

The results are shown in FIG. 3.

In the all-solid-state battery of Example 1, the average particle size (D₅₀) of the solid electrolyte present at the interface between the negative electrode active material layer and solid electrolyte layer is bigger than that of Comparative Example 1. That is, the porosity of the negative electrode active material layer of Example 1 is lower than that of Comparative Example 1, and the average diameter of the pores of Example 1 is smaller than that of Comparative Example 1, so that less solid electrolyte penetrates the pores compared to Comparative Example 1. As a result, the all-solid-state battery of Example 1 showed excellent lifetime characteristics. On the other hand, the all-solid-state battery of Comparative Example 1 has more solid electrolyte penetrating into the pores than Example 1, resulting in increased side reaction and irreversible capacity of the negative electrode active material and solid electrolyte, and decreased life characteristics.

Thus, it can be seen that the all-solid-state battery of the present invention has an average particle size (D₅₀) of 1 µm to 3 µm of the solid electrolyte present at the interface between the negative electrode active material layer and the solid electrolyte layer, which can reduce the solid electrolyte penetrating into the pores of the negative electrode active material layer, thereby improving the life characteristics of the all-solid-state battery.

## Claims

1. An all-solid-state battery comprising:
a positive electrode comprising a positive electrode active material layer;
a negative electrode comprising a negative electrode active material layer; and
a solid electrolyte layer comprising a solid electrolyte interposed between the positive electrode active material layer and the negative electrode active material layer,
wherein the negative electrode active material layer comprises a carbon-based material,
wherein the solid electrolyte present at an interface between the negative electrode active material layer and the solid electrolyte layer has an average particle size of 1 µm to 3 µm.

2. The all-solid-state battery according to claim 1,
wherein the negative electrode active material layer has a porosity of 15 to 40%.

3. The all-solid-state battery according to claim 2,
wherein the average diameter of the pores of the negative electrode active material layer is 0.5 µm to less than 0.7 µm.

4. The all-solid-state battery according to claim 1,
wherein the carbon-based material comprises at least one selected from the group consisting of natural graphite, artificial graphite, hard carbon, soft carbon, carbon black, acetylene black, Ketjen black, channel black, furnace black, lamp black, thermal black, carbon nanotubes, fullerene, carbon fiber, and carbon fluoride.

5. The all-solid-state battery according to claim 1,
wherein the negative electrode active material layer further comprises a metal,
wherein the metal comprises at least one selected from the group consisting of nickel, copper, silver, gold, platinum, aluminum, zinc, palladium, and bismuth.

6. The all-solid-state battery according to claim 1,
wherein the solid electrolyte has an average particle size of 2 µm to 4 µm.

7. The all-solid-state battery according to claim 1,
wherein the solid electrolyte comprises at least one selected from the group consisting of a sulfide-based solid electrolyte, a polymer-based solid electrolyte, and an oxide-based solid electrolyte.

8. The all-solid-state battery according to claim 7,
wherein the solid electrolyte comprises a sulfide-based solid electrolyte.

9. A method of manufacturing an all-solid-state battery of claim 1, comprising the steps of:
(1) mixing a carbon-based material, a binder, and a solvent to prepare a composition for forming a negative electrode active material layer;
(2) applying and drying the composition for forming a negative electrode active material layer on a negative electrode current collector to form a negative electrode active material layer;
(3) pressurizing the negative electrode active material layer to prepare a negative electrode;
(4) mixing a solid electrolyte, a binder, and a solvent to prepare a composition for forming a solid electrolyte layer;
(5) applying and drying the composition for forming a solid electrolyte layer onto the negative electrode active material layer to prepare a solid electrolyte layer; and
(6) laminating a positive electrode on the solid electrolyte layer.

10. The method of manufacturing an all-solid-state battery according to claim 9,
wherein the pressurization in step (3) is performed to 30 to 500 MPa.

11. The method of manufacturing an all-solid-state battery according to claim 9,
wherein the positive electrode is prepared by applying and drying a composition for forming a positive electrode active material layer comprising a positive electrode active material, a binder, and a solvent to a positive electrode current collector.
